# EUROPEAN PATENT SPECIFICATION

(11) **EP 0 734 143 B1**
(45) Date of publication and mention of the grant of the patent: **28.04.2004**
(21) Application number: 96850053.8
(22) Date of filing: 15.03.1996
(51) Int. Cl.: H04M 15/00, H04Q 7/32, H04M 3/42

(54) **Telecommunications system with person/subscriber-associated identification**
Telekommunikationssystem mit personen/teilnehmerverbundener Identifikation
Système de télécommunication avec identification liée à une personne/abonné

(30) Priority: 23.03.1995 SE 9501051
(43) Date of publication of application: 25.09.1996
(73) Proprietor: TELIA AB, 123 86 Farsta (SE)
(72) Inventor: Ohlsson, Bo, 135 53 Haninge (SE)
(74) Representative: Karlsson, Leif Karl Gunnar

(56) References cited:
- US-A- 4 640 986
- US-A- 4 776 000
- US-A- 4 989 230
- ARNDT G, GATTI N, LAVAGNOLO R : "INTERNATIONAL STANDARDS ON UNIVERSAL PERSONAL TELECOMMUNICATIONS: STATE OF THE ART AND FUTURE PROJECTIONS" 1ST INTERNATIONAL CONFERENCE ON UNIVERSAL PERSONAL COMMUNICATIONS, ICUP 92 PROCEEDINGS (CAT N°=92THO434-1), DALLAS , TX, USA,29 September 1992 - 1 October 1992, pages 03.01/1-5, XP002103549

## Description

### TECHNICAL FIELD

The invention relates to a device according to the introduction to the patent claims.

### PRIOR ART

It has previously been suggested different ways and devices to forward telephone calls. By the European document EP,A2, 484067 automatic forwarding of calls is described. Calls are automatically forwarded to a subscriber who is on the move by collecting information about position when the subscriber performs certain actions, such as for instance makes his/her purchases by means of a credit card or makes a call by means of a credit card.

The American patent document 5315636 shows a "personal telecommunications system" where a subscriber only need a personal telephone number and where a call to this number is automatically connected to the telephone terminal which is nearest the subscriber. The subscriber carries a personal communication unit which by means of radio communication allows that his/her position can be determined. The position is registered in a database and when a call is coming in to the subscriber the call is connected to the terminal which corresponds to the subscriber's present or latest known position.

US-A-4 989 230 discloses a cellular cordless telephone which operates with both a cordless base station and a cellular base station and a cellular control terminal.

An article by G. Arndt, N. Gatti, R. Lavagnolo "International Standards on Universal Personal Telecommunications: State of the Art and Future Projections", 1^{st} International Conference on Universal Personal Communications, ICUP 92 Preceedings (Cat N=92TH04434-1), Dallas, TX. USA, 29 September 1992 - 1 October 1992, discloses a Universal Personal Telecommunications system, and presents it as a concept for global personal telecommunications, and a comprehensive approach to provide telecommunications services to people on the move and with varying telecommunications needs. A subscriber has a personal number (UPT Number) to which charges can be applied, instead of to the network access/terminal used. The personal number can be moved to all networks.

### DESCRIPTION OF THE INVENTION

### TECHNICAL PROBLEM

The aim with the invention is to achieve one in relation to the prior art improved and simplified telecommunications system.

In the future the public land-based telecommunications network will allow personal mobility, i.e. that the subscriber shall have the possibility to register himself/herself at an optional telecommunication terminal at the location where the subscriber is at present, or to/from where he/she wants his/her incoming/outgoing calls connected. When debiting shall take place, it shall at that be possible to perform against the subscriber which is the owner of just that terminal. Today work is performed to make it possible to combine this personal mobility (UPT) with the terminal mobility which is offered by the mobile systems. A disadvantage with the UPT-service is that the subscriber has to make a call to register himself/herself at just that telephone. This function is similar to the roaming function which is used in the mobile systems, but with the difference that the function there is automatized. The technical problem the invention relates to is therefore to produce a device and a method which allows automatic registration in the fixed public telecommunications network for the service personal number at connection to and utilization of a portable telecommunications terminal in the fixed telecommunications network.

### THE SOLUTION

The above mentioned aims are achieved by the invention showing the in the enclosed patent claims indicated characteristics.

The main characteristics of the invention is briefly that one or more mobile units are arranged for connection to optional subscriber- or extension line in the fixed telecommunications network via connection device, for instance jack, and that in the fixed and/or mobile system arranged identification devices are arranged to identify the via said connection device to the fixed network connected mobile unit for debiting of the use of the mobile unit in the fixed network. Further, the system is arranged to be entered by connection to the connection device of the subscriber- or extension line by means of mobile unit of the type which exists in cellular radio communications systems such as for instance GSM, NMT etc, and that the telecommunications system is arranged to operate with mobility functions which correspond to the mobility functions of the cellular system.

The telecommunications system also comprises a construction which at comparison with the cellular system has the BSC- and BTS-functions replaced for connection of fixed subscriber lines, and that existing mobility functions are implemented in a UPT-system and where connections have been established for the connectivity to said UPT-system of the mobile units.

### ADVANTAGES

The invention gives a lot of advantages, among other things a better and more flexible communications system is obtained. Further the handling of the mobile telephones or the mobile stations is made easier. The probability that one will reach a person one is in search of is increased. The use of one telephone number for a subscriber in his/her different situations in the course of a day also causes that the accessibility and the availability will increase.

### DESCRIPTION OF FIGURES

The invention will now be described by means of not restricted examples of embodiment and with references to enclosed, schematically performed drawings. In the drawings:
- Figure 1: shows a telecommunications network.
- Figure 2: shows the change from mobile GSM to "fixed GSM".

### DETAILED DESCRIPTION

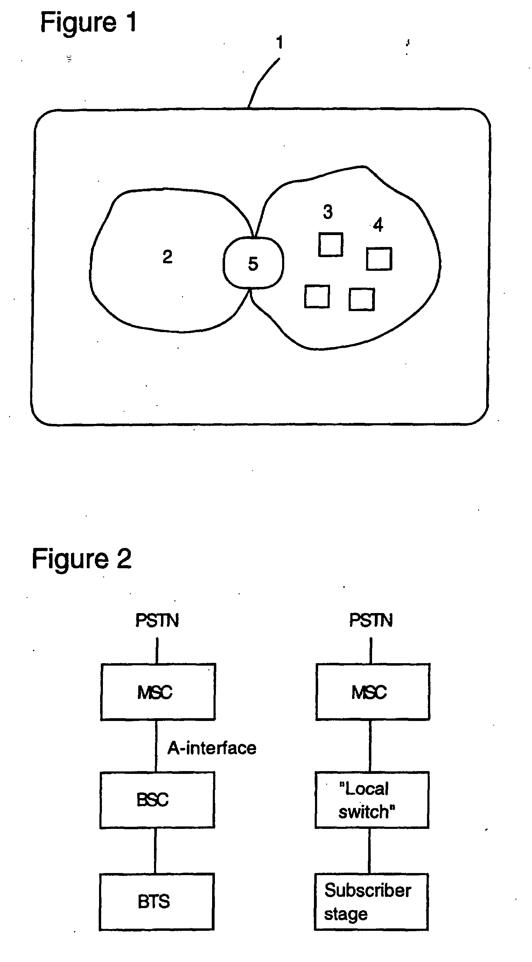

In Figure 1 is shown a telecommunications system 1 including a fixed tele- and data communications system 2, here called fixed system, and a radio communications system 3, for instance of the type variant of the GSM-system, here called mobile system, which latter mobile system includes mobile units 4, at which respective mobile unit of a number of mobile units, for instance all mobile units 4, are arranged for connection to optional subscriber - or extension line in the fixed system via connection device (for instance jack), and that in the fixed and/or the mobile system arranged identification devices 5 are arranged to identify the via said connection device to the fixed system connected mobile unit for debiting of the use of the mobile unit in the fixed system.

The total coverage of the mobile telephone network is divided into switch areas, MSC-areas, which in their turn can consist of one or more traffic areas, "Location areas". Characteristic for a location area is that a mobile can move within the area without the need to update a traffic area register, "location register". Within each location area there are a number of base stations connected which have coverage over local areas called cells.

The location areas consist of a number of "Base Station Systems" (BSS). A base station system covers a base station area consisting of one or more cells. The Base Station System consist of Base Station Controller (BSC), and a number of stations including both transmitters and receivers, so called Base Transceiver Stations (BTS).

BSC is a network component which controls one or more BTSes, at which the main tasks are managing of traffic channel by channel allocation, control and disconnection of link, and power control as well as managing of measurements at handover.

A BTS is a network component which serves a cell. BTS contains one or more combined transmitters/receivers, Transceivers (TRX).

A PLMN is accordingly divided into one or more mobile telephone switches depending on the size of the system (capacity and coverage) the operator provides in his/her system.

The mobile telephone switch is called a "Mobile Service Switching Center" (MSC). The MSC operates as interface between the fixed telephone network and the mobile telephone network (Gateway MSC) and between a number of MSCs which serve different geographical parts of the network.

The mobile station is the subscriber's equipment which can be mounted in a car or be handportable. In GSM there is an obvious difference between the physical device and the subscription. All information which is bound to the subscriber is stored on a "smart card" which can be used in just any mobile station.

The visitor register (location area register) "Visited Location Register" (VLR) contains subscriber information for those who are in the location areas belonging to this VLR. When subscriber "mobile" is searched for, "roaming number" is fetched by HLR which has a reference to the Visited Location Register (VLR) in question. In this way the network rapidly and efficiently can find the mobile at calls from the telecommunications network. Each mobile belongs to a home register, "Home Location Register" (HLR). This register contains all necessary subscriber- and mobile information, among other things information about in which VLR and location area the mobile is.

HLR is the register which gateway MSC or a telephone station (in the fixed network) asks for to get "roaming number" to wanted mobile. If a mobile moves from one location area to another, all relevant register parameters of the mobile are transferred from HLR to the VLR of the new location area. In HLR a reference is made to the new VLR.

The GSM-system has by the invention been further developed and comprises traffic also in the fixed network, resulting in that a combined terminal- and personal mobility can be offered the customers who want it, and in the future perhaps the majority of all subscribers. I.e. a GSM-variant where the mobility functions (for the SIM-card and by that the subscriber) still exist, but BSC and BTS are replaced for connection of fixed subscriber lines.

The invention results in at least two new components, one of which in the network: - One "GSM local switch" - One "fixed GSM-telephone", respective one "dual mode telephone" (dealt with in a separate patent application).

A "GSM local switch" without any real switch function but with subscriber stage, irrespective of whether these are remote or not. This "local switch" connects the subscribers via the A-interfaces with MSC, which is the proper switch. Because handover is not needed at wirebased telephony, the BSC-function consequently can be replaced by this simple "local switch" which can manage all signalling from MSC. The subscribers are divided into "Local Areas" in a way that a registering subscriber (= telephone with SIM-card) can make an authentication and updating of the localization registers (HLR/VLR). The signalling to/from the fixed telephone is made with DTMF, which in the "local switch" is converted to signalling for the A-interface.

It must be emphasized that this UPT-functionality only can be offered the subscriber lines which are connected to a "GSM local switch" (= access point for a fixed GSM-telephone").

In Figure 2 is shown how the mobile GSM-network in principle is changed in such a way that it can offer fixed telephony in the form of an UPT-service. It must be noticed that the two MSCs might be replaced by one which handles both "fixed" and mobile subscribers. It is further assumed that all MSCs in a network are connected.

The telecommunications system according to the invention comprises a fixed tele- and data communications system (also called a general public fixed system) and a radio communications system for instance of the type variant of the GSM-system which we chose to call a mobile communications system with a number of portable mobile telephones. These mobile telephones are connectable to optional subscriber lines and extension lines. This can be done in many different ways, for instance by different types of jacks and connection devices.

When the mobile unit is connected to the fixed network the identification device identifies that it is a mobile telephone which is connected. The identification device consists, to certain parts, of known functionality from corresponding devices from the conventional mobile telephony system, as well as other functions which are indicative of signals emanating from the conventional fixed system. These signals which are forwarded in the network are sensed by the network and makes possible that payment of a call which emanates from the fixed network can be debited the subscription which is connected to the mobile telephone.

The idea of the invention also can be described as device at universal personal telecommunications system (UPT) where subscribers in the system enter or get access to the system via optional subscriber- or extension connection. The system identifies the entered subscriber to make possible debiting of the subscriber's use of the system. Further, the system is arranged to be entered by connection to connection device (subscriber- or extension jack) of the subscriber- or extension line by means of mobile unit of the type which exists in cellular radio communications systems. Usually of the type variant of the GSM-system at which the telecommunications system is arranged to operate with mobility functions which correspond to the mobility functions of the cellular radio communications system.

The telecommunications system further comprises a construction which in comparison with the cellular radio based system has the BSC- and BTS-functions replaced for connection of fixed subscriber lines.

A use of the idea according to the invention is.that mobility functions in cellular radio communications system, preferably of the type GSM, where the positions for the mobile units of the system can be traced by means of indentification devices for debiting of the use of the system by the different subscribers, at which the mobility functions are implemented in a universal personal telecommunications system (UPT) where connections/jacks to fixed subscriber- and extension lines have been arranged for the connectivity of respective mobile unit to the universal personal telecommunications system.

Another idea of using can be described as a use of mobile unit and mobility functions which exists in cellular radio communications system, preferably of the type GSM-system. The mobile unit is used as mobile device in a fixed telecommunications system which executes universal personal telephony by means of mobility functions which correspond to the mobility functions in the cellular radio communications system, in which fixed system connections are made via connection devices/connection jacks to subscriber- or extension lines.

According to one variant of the idea of invention the invention also can be described as a device at universal personal telecommunications system (UPT) where subscribers in the system enter the system via optional subscriber- or extension connection and the system at that is arranged to identify the entering subscriber for debiting of the subscriber's use of the system. The system operates with mobility functions which correspond to the mobility functions in a cellular radio communications system, preferably the GSM-system, that it instead of the in the cellular radio communications system existing BSC- and BTS-stages are arranged connections for fixed subscriber lines.

One unit is arranged to connect the subscribers transparently via a fixed connection with BSC (compare the function for the cellular radio communications system) arranged to operate with switching function.

The mentioned unit for connection of the subscribers is in principle a replacement of said BSC-function, which unit has concentrator function.

The subscribers are in the same way as in the cellular radio communications system divided into location areas making it possible for a registering or entering subscriber (= telephone/mobile unit with SIM-card) to make an updating of the localization registers (compare HLR/VLR)

The invention is not restricted to the shown examples of embodiment, but can be varied in just any way within the frame of the idea of invention, such as it is defined in the following patent claims.

## Claims

1. Telecommunications system (1) including a fixed tele- and data communications system (2), here called fixed system, and a cellular radio communications system (3), here called mobile system, which latter mobile system includes mobile units (1), respective mobile unit of a number of mobile units (4) being arranged for connection to an optional subscriber- or extension line in the fixed system via a connection device identification devices (5) arranged in the fixed and/or mobile system being arranged to identify the mobile unit connected to the fixed system via said connection device for debiting of the use of the mobile unit in the fixed system, **characterized in that** the telecommunications system (1) is arranged to operate with mobility functions which correspond to the mobility functions of the cellular radio communications system (3), and that the telecommunications system (1) comprises a construction which at comparison with the cellular radio communication system (3) has the BSC- and BTS-function replaced for connection of fixed subscriber lines.

2. Device (5) at universal personal telecommunications system where subscribers in the system enter the system via optional subscriber- or extension connection, the device (5) being arranged to identify the entered subscriber for debiting of the subscriber's use of the system, and the system being arranged to be entered by connection to a connection device of the subscriber- or extension line by means of mobile unit (4) of the type which exist in cellular radio communications system (3), **characterized in that** the device (5) is arranged to operate with mobility functions which correspond to the mobility functions of the cellular radio communications system (3), and that the device (5) comprises a construction which at comparison with the cellular radio communication system (3) has the BSC- and BTS-function replaced for connection of fixed subscriber lines.

3. Device according to claim 2, **characterized in that** a unit is arranged to connect the subscribers transparently via a fixed connection with BSC arranged to operate with switching function.

4. Device according to claim 2 or 3, **characterized in that** said unit for connection of the subscribers is a replacement of said BSC-function, which unit has concentrator function.

5. Device according to any of the claims 2-4, **characterized in that** the subscribers in the same way as the cellular radio communications system (3) are divided into location areas and that localization repisters are arranged to be updated by a registering or entering subscriber.

## Patentansprüche

1. Telekommunikationssystem (1), das ein festes Tele- und Datenkommunikationssystem (2), das hier festes System genannt wird, und ein zellulares Funkkommunikationssystem (3), das hier Mobilsystem genannt wird, aufweist, welch letzteres Mobilsystem Mobileinheiten (1) aufweist, wobei eine Mobileinheit einer Anzahl von Mobileinheiten (4) für Verbindung mit einer optionalen Teilnehmer- oder Nebenstellenleitung in dem festen System über eine Verbindungseinrichtung ausgebildet ist, wobei Identifizierungseinrichtungen (5) in dem festen und/oder Mobilsystem angeordnet sind, die dazu ausgebildet sind, die Mobileinheit, die mit dem festen System über die Verbindungseinrichtung verbunden ist, zu identifizieren, wobei sie die Verwendung der Mobileinheit im festen System in Rechnung stellt, **dadurch gekennzeichnet, dass** das Telekommunikationssystem (1) dazu ausgebildet ist, mit Mobilitätsfunktionen zu arbeiten, die den Mobilitätsfunktionen des zellularen Funkkommunikationssystems (3) entsprechen, und dass das Telekommunikationssystem (1) einen Aufbau aufweist, bei dem im Vergleich mit dem zellularen Funktelekommunikationssystem (3) die BSC- und die BTS-Funktion für Verbindung von festen Teilnehmerleitungen ersetzt sind.

2. Einrichtung (5) bei einem universellen persönlichen Telekommunikationssystem, bei dem Teilnehmer in dem System in das System über eine optionale Teilnehmer- oder Nebenstellenverbindung eintreten, wobei die Einrichtung (5) dazu ausgebildet ist, den eingetretenen Teilnehmer für Rechnungsstellung der Benutzung durch den Benutzer des Systems zu identifizieren, und wobei das System dazu ausgebildet ist, dass durch Verbindung zu einer Verbindungseinrichtung der Teilnehmer- oder Nebenstellenleitung mit Hilfe einer Mobileinheit (4) des Typs, der im zellularen Funkkommunikationssystem (3) existiert, Zugang genommen wird, **dadurch gekennzeichnet, dass** die Einrichtung (5) dazu ausgebildet ist, mit Mobilitätsfunktionen zu arbeiten, die den Mobilitätsfunktionen des zellularen Funkkommunikationssystem (3) entsprechen, und dass die Einrichtung (5) einen Aufbau aufweist, bei dem im Vergleich mit dem zellularen Funkkommunikationssystem (3) die BSC- und BTS-Funktion für Verbindung von festen Teilnehmerleitungen ersetzt sind.

3. Einrichtung nach Anspruch 2, **dadurch gekennzeichnet, dass** eine Einheit ausgebildet ist, die Teilnehmer transparent über eine feste Verbindung mit BSC zu verbinden, der dazu ausgebildet ist, mit Vermittlungsfunktion zu arbeiten.

4. Einrichtung nach Anspruch 2 oder 3, **dadurch gekennzeichnet, dass** die Einheit für Verbindung der Teilnehmer ein Ersatz der BSC-Funktion ist, welche Einheit eine Konzentriererfunktion hat.

5. Einrichtung nach einem der Ansprüche 2 bis 4, **dadurch gekennzeichnet, dass** die Teilnehmer in derselben Weise wie das zellulare Funkkommunikationsystem (3) in örtliche Gebiete aufgeteilt sind, und dass Lokalisierungsregister ausgebildet sind, durch einen sich registrierenden oder Zugang nehmenden Teilnehmer aktualisiert zu werden.

## Revendications

1. Système de télécommunication (1) incluant un système fixe de télécommunication et de communication de données (2), appelé ici système fixe, et un système de radiocommunication cellulaire (3), appelé ici système mobile, ce dernier système mobile comprenant des unités mobiles (1), une unité mobile respective d'une pluralité d'unités mobiles (4) étant agencée pour connexion à une ligne optionnelle d'abonné ou d'extension dans le système fixe via un dispositif de connexion, des dispositifs d'identification (5) prévus dans le système fixe et/ou le système mobile étant agencés de manière à identifier l'unité mobile connectée au système fixe via le dit dispositif de connexion pour la facturation de l'utilisation de l'unité mobile dans le système fixe, **caractérisé en ce que** le système de télécommunication (1) est prévu pour travailler avec des fonctions de mobilité qui correspondent aux fonctions de mobilité du système de radiocommunication cellulaire (3), et **en ce que** le système de télécommunication (1) comprend une construction dans laquelle, par rapport au système de radiocommunication cellulaire (3), la fonction BSC et la fonction BTS sont remplacées pour connexion de lignes d'abonné fixes.

2. Dispositif (5) dans un système de télécommunication personnelle universelle dans lequel les abonnés du système entrent dans le système via une connexion optionnelle d'abonné ou d'extension, le dispositif (5) étant agencé de manière à identifier l'abonné entré afin de facturer l'utilisation du système à l'abonné, et le système étant agencé pour être entré par connexion à un dispositif de connexion de la ligne d'abonné ou d'extension au moyen d'une unité mobile (4) du type qui existe dans un système de radiocommunication cellulaire (3), **caractérisé en ce que** le dispositif (5) est prévu pour travailler avec des fonctions de mobilité qui correspondent aux fonctions de mobilité du système de radiocommunication cellulaire (3), et **en ce que** le dispositif (5) comprend une construction dans laquelle, par rapport au système de radiocommunication cellulaire (3), les fonctions BSC et BTS sont remplacées pour connexion de lignes d'abonné fixes.

3. Dispositif selon la revendication 2, **caractérisé en ce qu'**une unité est prévue pour connecter les abonnés de façon transparente via une connexion fixe avec BSC agencé de manière à travailler avec une fonction de commutation.

4. Dispositif selon la revendication 2 ou 3, **caractérisé en ce que** la dite unité pour connexion des abonnés est un remplacement de la dite fonction BSC, cette unité ayant une fonction de concentrateur.

5. Dispositif selon une quelconque des revendications 2 à 4, **caractérisé en ce que** les abonnés, de la même façon que dans le système de radiocommunication cellulaire (3), sont répartis en zones de localisation, et **en ce que** des registres de localisation sont agencés de manière à être mis à jour par un abonné qui s'enregistre ou qui entre.
